# EUROPEAN PATENT SPECIFICATION

(11) **EP 1 421 995 B1**
(45) Date of publication and mention of the grant of the patent: **08.06.2005**
(21) Application number: 03022786.2
(22) Date of filing: 10.10.2003
(51) Int. Cl.: B03B 9/06, B02C 23/08

(54) **Recycling apparatus for gypsum plasterboards**
Vorrichtung zur Wiedergewinnung von Gipskartonplatten
Dispositif de recyclage de plaques de placoplâtre

(30) Priority: 10.10.2002 DK 200201531
(43) Date of publication of application: 26.05.2004
(73) Proprietor: Gips Recycling A/S, 7700 Thisted (DK)
(72) Inventor: Rasmussen, Karsten, 7700 Thisted (DK)
(74) Representative: Tellefsen, Jens J.

(56) References cited:
- WO-A-00/71257
- DE-U- 20 004 472
- US-A- 5 100 063
- US-A- 6 164 572
- US-B1- 6 295 794

## Description

The present invention relates to an apparatus for recycling of materials comprising a hydraulic binder and in particular gypsum. Furthermore, the invention also relates to a method for regenerating/reusing materials comprising a hydraulic binder especially gypsum.

When buildings and other structures are demolished, the demolished materials may be separated in different fractious according to the types of materials. As for example metals, especially steel, is separated in that it is possible to rework by melting and, thereby, reuse the already used steel in the production of new steel.

In a similar way, it is possible to separate glass, concrete and other materials. The separation is done in order to save money in that the reused/regenerated materials have value and also because of environmental restrictions in that the storage of different materials in landfills is restricted such that hazardous materials are stored in one way and none-hazardous materials in a different way. The price of storage varies enormously and is especially expensive for mixed waste, and therefore, it is interesting to separate the materials such that a major part of the waste may be stored in the non-mixed waste landfills where it is substantially cheaper than storage in mixed waste landfills or all together reused whereby an added value may be generated.

Within the construction industry, it has been generally known to use plasterboards for the construction of non-load carrying dividing walls and as interior cladding in connection with renovation and/or insulation of exterior walls. An interior separating wall will typically be established by firstly erecting a latticework of light weight metal profiles onto which the plasterboards are fastened for example by screws.

The apparatus according to the present invention may be used for any type of waste. Generally, three main types of plaster board waste exist:
1) new plaster board: during the manufacturing process parameters or machinery may cause quality problems or the like which necessitates that the production must be destroyed,
2) during construction the plaster boards are cut to fit. The cut-aways are usually thrown away and is waste, and
3) waste from demolition.

Many devices may treat category 1) and 2) since the paper sheets and the gypsum is fairly pure, whereas in category 3) the plaster boards may be polluted by dust, grime, nails etc. This third category is usually not reprocessed.

The plasterboards are typically constructed such that gypsum is arranged between two layers of heavy paper, carton or hessian, where the gypsum layer is approximately 10 to 20 mm thick. During production, the plasterboard is rolled and dried, whereby it attains the necessary strength for general use and the mounting process on the metal latticework.

Plasterboards of the type described above has a number of advantageous features such as fire retardant, noise insulating, and furthermore, they are fast and relatively simple to mount as well as the square meter price is relatively low. These characteristics have made this type of plasterboards relatively wide-used.

Due to increased prices on the raw materials as well as ever stricter environmental demands, especially regarding the control of landfill sites, the feasibility of reusing demolished materials has become economically viable.

To this end, a number of apparatuses has been developed and used. One such example is known from US 5 100 063 to Bauer wherein an apparatus for processing waste plasterboards of the type described above is disclosed. Pieces of pre-cut plasterboard are fed into a crusher where a pair of rollers having a parallel axis of rotation is held to a variably closed spacing under pressure such that when the plasterboard is introduced between the two rollers, the rotation of the rollers will cause the plasterboard to be brought through the crusher. At the same time, the two rollers are urged together such that a pressure is built into the plasterboard. Hereby, the dry gypsum placed between the two cover sheets will be crushed to a certain degree, and a coarse gypsum powder will result from this crushing. After the crusher, the plasterboard is reduced to two pieces of paper and crushed gypsum. In practice, however, it has shown that a rather high degree of gypsum remains on the paper such that the cost of reusing the paper is very high, and as well the cost in storing the paper in landfills is quite expensive. Furthermore, in order to achieve a high level of regenerated gypsum, the plasterboard needs to be relatively dry, and at the same time, wallpaper, paint or other surface treatments are detrimental to the amount of gypsum, which it is possible to crush and thereby reduce to powder and debris from the covering sheets. The apparatus according to the Bauer'063 compensates this by adding a second crusher which will recrush all the pieces of plasterboard material which are larger than a particular size. Furthermore, in order to separate the paper from the crushed gypsum, the entire mass is led to a vibrating screen such that the paper is supposed to remain on the screen and the crushed gypsum material will be collected. The '063-apparatus also realises that the regenerated gypsum is not pure enough in order to be recycled into new plasterboards but is mainly used as a soil conditioner.

Another example of an apparatus for recycling gypsum based plasterboards is disclosed in US 6 164 572. This apparatus consists of mainly three devices, namely a crusher, a grinder and a separator. The crusher comprises two counter-rotating rollers where each roller is equipped with teeth, offset from the teeth on the opposite roller such that when a plasterboard is introduced into the slip between the two rollers, the plasterboard will be torn apart and reduced to fragments. Pending on the relative speed of the two rollers, the amount of material introduced into the apparatus may be adjusted. The fractured plasterboard is thereafter, by transporting means, led into the grinder. Inside the grinder an axle with paddles is arranged as well as stators arranged on the inside wall of the grinder housing. As the plasterboard fragments are moved through the grinder by action of the paddles, the interaction between the paddle and the stators will cause the fragments to be even further fractured such that the plasterboards will become crushed and the paper fraction effectively shredded.

Both during the crushing process and also during the grinding process, the volume of gypsum in more or less coarse powder form will be accumulated and transported on in the apparatus. Finally, the crushed material comprising paper, gypsum and gypsum powder will be introduced into the separator. The separator comprises a second rotating axle onto which a number of hammers are arranged on a rotating shaft. Co-axially around the outer extremities on the hammers a screen drum is arranged. As the mass of paper, gypsum and paper-comprising gypsum is led into the separator, the hammers will, by the action on the paper, force the gypsum particles through the screen drum such that a relatively effective separation of the gypsum from the paper is achieved. The gypsum is collected by a chute and stored for example in big bags, and the more or less gypsum-free paper is collected in a separate chute and may also be stored in big bags.

The separating unit where the gypsum is separated from the paper through the action of the hammers and the screen drum as well as the action in the crusher and the grinder although only to a certain degree separate the gypsum from the paper, it also shreds to such an extent that a relatively high paper content is created such that it will follow the gypsum fraction and thereby constitute a polluting agent in the separated gypsum fragments. Too high a paper content in the separated gypsum makes it unsuitable for use in new plaster board products.

Consequently, it is the object of the present invention to alleviate the disadvantages arising from the known separating apparatuses by providing an apparatus as well as a method which in one process breaks down and separates as well as regenerates materials comprising a hydraulic binder and especially gypsum products.

According to the invention, this problem is solved by providing an apparatus which is special in that the apparatus comprises a hopper arranged in connection with means for providing a coarse crushing of materials introduced into the hopper, and further that the means for coarse crushing is in connection with a first conveying means, which conveys the coarse crushed material to an inlet opening for a roller mill device where the coarse crushed material is rolled, after which a second conveyor means conveys the material to a separating device comprising a perforated separating drum, where the perforations allows the crushed and milled fine particles to pass through the perforations and be collected in a third conveyor means for reuse or alternatively storage, and that the material left in the drum by means of a fourth conveyor means, is transported away for storage or disposal.

The apparatus according to the invention, makes it possible to load all the gypsum related waste, for example plasterboards and the like including the metal latticework, screws, electrical installations and so forth, directly into the hopper. At the bottom of the hopper, a crusher which performs a coarse crushing of the waste material is provided.

In this connection, it is important to distinguish between the coarse crushing, crushing, pre-cut and grinding. By pre-cutting is usually meant that the plasterboards contained in the waste material are cut to a size such that they will fit inside the hopper. By crushing and grinding is usually meant that the materials which are led through the crushing/grinding device are disintegrated/shredded into a very small size. This includes both paper and gypsum.

Within the scope of the present invention, coarse crushing implies that the plasterboards and other materials are divided into pieces at approximately 4 or 5 cm in either direction. This is an important difference in that the cover sheets usually consisting of cardboard or paper are not shredded into very small sizes whereby it will be difficult to separate the paper fraction from the gypsum later in the process, but the sheet sizes is such that as the waste material is further processed in the inventive apparatus according to the invention, it is possible to retrieve substantially 100 % of the sheet material. Furthermore, when the sheet material is completely shredded as is the case with some of the prior art devices, it is difficult to ensure that a complete separation of gypsum from the shredded pieces of sheet material will effectively be carried out whereby it is difficult/impossible to ensure that a pollution free gypsum and pollution free sheet material mass are collected at the output of the apparatus.

Consequently, at the bottom of the hopper, a means for the coarse crushing of the waste material is provided such that a mass of waste comprising among other things plasterboard pieces of the size described above will be formed.

The coarse crusher may in one embodiment be equipped with one rotating roller inside a hopper. On the roller is arranged a number of knives and the roller rotates relatively slow. The roller is arranged near the hopper's outlet and inclined interior walls in the hopper urge the waste towards the roller.

In order to force the material into the rotating roller, a pushing blade, optionally activated by a hydraulic cylinder, may push the waste into the roller. Thereby is achieved that the waste will always be led to the coarse crusher. The rotating knives furthermore, due to the relative slow speed, cuts the plaster boards, whereas at higher speeds a slashing or hammering action may occur.

The mass is by means of a conveyor transported to a roller mill device. During the passage of the roller mill, the coarse waste mass will be milled such that the particles of the mass will have a generally flat shape.

Materials comprising a hydraulic binder usually have the characteristic that they have a good resistance towards pressure but negligible resistance against tension, the interior integrity therefore is relatively low inside the material. By firstly coarse crushing the material and thereafter rolling the hydraulically bound materials, the gypsum will have a tendency to disintegrate/pulverise by any mechanical influence. During the rolling in the roller mill, the pieces of plaster board will initially be exposed to pressure as the rolls grip the pieces. Due to the differentiated rotational speed of the two rollers, tension will be applied in the plaster board piece whereby the piece will disintegrate. In practice, it was recognised that during the milling action, a very high pure gypsum content is produced due to the differentiated speed with which the rollers of the roller mill device are driven.

After the roller mill device, a second conveying means transports the milled material to a separating device comprising a perforated separating drum. The mechanical influence necessary in order to disintegrate/pulverise the material as mentioned above whereby the hydraulically bound material is separated from the sheet material is partly achieved by the transport in the second conveyor means and partly by rotation of the drum where the milled flat particles of the waste will be thrown around inside the drum such that it will impact the inside wall of the drum and also impact with other particles of the waste mass. During this process, the hydraulically bound material will be pulverised to such a degree that it will pass through perforations/apertures in the wall of the drum and also, due to the wear between the particles in the waste, additional gypsum particles will be loosened form the paper and pass through the wall of the drum. This pulverised or powder-like material will be collected underneath the separating drum. It is then possible to collect and reuse/regenerate the material, or transport it on to a package and/or storage facility. Other parts of the waste material such as metal for example deriving from the metal latticework as described above, electrical installations, screws etc. will not be pulverised due to the mechanical influence in the separating drum. Furthermore, sheets, usually paper, which were used in order to produce the plasterboard will also not be pulverised, and these left-over materials, therefore, constitute the residue waste. The residue waste is taken out of the separating drum, as this residue has not been able to pass through the perforations/apertures in the separating drum's wall. Thereafter this residue waste consisting of relative clean paper can be stored in an appropriate manner in the landfill, or be processed for further reuse or regeneration.

By treating the waste of the type mentioned above in the inventive installation, the amount of waste which needs to be transported to and stored in a landfill has been greatly reduced, and, at the same time, a valuable resource, namely pure gypsum, has been generated which may be used for producing new plasterboards, soil conditioner or other products.

In a further advantageous embodiment of the invention, the means for coarse crushing of materials comprise one or more rollers and/or rasping devices. The rasping devices or rollers are made in a wear-resistant manner such that rotation of two rasping devices or rollers will effectively crush the waste material. As an alternative to the rasping devices or rollers, a hammer device may be used. The hammer device comprises a longitudinal axle on which a number of hammers are arranged extending substantially perpendicular to the longitudinal direction of the axle. When the axle is brought to rotate, the hammers will crush the material. In a further alternative, the crusher can be shaped as two or more rotating axles where a number of spikes or knives are arranged offset in relation to the knives arranged on the opposite axle, such that when waste material is passed through the crusher, the two rotating axles comprising knives or spikes will crush (in this embodiment, it may be more appropriate to describe the process as a cutting action) due to the action of the spikes or knives.

In a further advantageous embodiment of the invention, the apparatus is constituted such that between the means for coarse crushing and the first conveying means and/or adjacent to the third conveying means, a magnetic separator is arranged. It may be advantageous to arrange the magnetic separator as early on in the process as possible as magnetic particles may excessively wear the other components of the apparatus. Therefore, by arranging the magnetic separators as early as before the first conveying means at least the larger magnetic items which have become loose through the coarse crushing may be separated from the waste material at this early state. Additionally, a second magnetic separator may be provided further on in the process in order to separate screws, nails and smaller magnetic items from the waste material for example before the perforated separating drum.

Depending on the circumstances, it may also be advantageous to pre-sort material such that larger sections of for example the metal latticework, electrical installations and other non-gypsum or non-sheet materials are separated prior to introducing the material into the machine, whereby a better separation process, and thereby, a higher efficiency of the entire regenerating process may be achieved.

Materials comprising a hydraulic binder are typically hydroscopic, i.e. they will have a tendency to absorb water which in practice show that the materials have a relatively high content of water. Especially for the gypsum, the effect of a rather high moisture content is that it will be very difficult to effectively crush and pulverize the gypsum content.

In a further advantageous embodiment of the invention, this problem is addressed in that inside or in connection with the means for coarse crushing and/or between the roller mill and the separating device, means are provided for heating the crushed material. By introducing means for heating and thereby drying the material, a higher degree of pulverization and thereby regeneration of the gypsum content may be achieved, and at the same time the residue, i.e. the sheet material of the plasterboard for example paper may be cleaner and thereby either cheaper to store in landfills or easier to reuse. The drying may be effected for example by microwaves, infrared canons, gas heating or any other suitable means.

The chemical structure of gypsum is such that the material should not be heated above 200 degrees Celsius in that for gypsum this is the temperature where the crystalline water is released. If this water is released, i.e. the material is heated above 200 degrees Celsius, it is not possible to reuse the gypsum for new gypsum products. With the present invention, it has been recognised that by heating the material to about 125 degrees Celsius, an optimal heating/dewatering is achieved, such that the regeneration through the apparatus of the present invention is optimal.

In a further advantageous embodiment of the invention, is provided that adjacent to the separating device and before the fourth conveying means, a paper collecting and compression device is provided. Especially in connection with regeneration and reuse of gypsum materials, especially plaster boards, as described above, there will be a substantial paper fraction. In order to arrange a paper press and compacting device immediately adjacent to the disintegration stage, the paper can effectively be separated and packed in an efficient manner and, therefore, not have influence on the further steps in the process.

In a still further advantageous embodiment of the invention, the apparatus is arranged on a commercial trailer suitable for road transport, and a means for providing power to the apparatus is provided in the apparatus. By providing a completely self-contained apparatus, it is possible to treat the waste material in-situ. It is an important advantage with the invention, that substantial cost may be saved due to not having to transport the construction waste to a fixed station, which may be situated at a distance from the construction site, when the apparatus according to the invention is moved on site or to a location nearby such that plasterboards and other materials comprising a hydraulic binder may be regenerated on site. The amount of waste which as illustrated above needs to be stored in a landfill is thereby greatly reduced, and thereby the cost for placing waste in a landfill can be seriously reduced. At the same time, the regenerated materials may be transported directly to production facilities for example for the production of new plasterboards or the like. The paper fraction may be taken directly to installations for reusing the paper, and the same is applicable to the metal parts which are suitable for reuse.

In a further advantageous embodiment of the apparatus as already discussed above, it is especially suitable for when the material comprising a hydraulic binder is plasterboard, which comprises a gypsum core either pure, modified and/or fibre reinforced, where said core is covered or partly covered on one or both plane sides by cover sheets, where said sheets may contain cellulose, for example as a paper product and/or said sheets may further be treated or covered by paint, polymers, textiles or other coverings. As plasterboard is widely used, as discussed above, whereas a substantial amount of waste material deriving from plasterboards when buildings or constructions are built, demolished or renovated, is generated. The apparatus described has an especially high efficiency in separating the gypsum fraction efficiently from the paper such that both materials may be reused.

In a further advantageous embodiment, the apparatus is constructed such that all means and equipment are provided in a dust closed environment, and that means are provided for maintaining a lower pressure inside the apparatus than in the surrounding environment. This aspect is important when the apparatus is used on site in city centres or other densely populated areas as the impact on the surrounding environment may be lessened.

In a further advantageous embodiment, the rollers of the roller mill are substantially cylindrical and rotates about a parallel longitudinal axis and further that the rollers are provided with asymmetric grooves and ridges parallel to the longitudinal axis, and that the asymmetry of the ridges is at least provided perpendicularly to the longitudinal axis, and optionally for the grooves in the width and depth of the individual grooves.

The asymmetric grooves and ridges have shown that it is possible to process a larger volume of waste material through the roller mill mechanism. The way the rollers grip the material is greatly improved in comparison to rollers without the asymmetric grooves and/or ridges. This is due to the fact that by introducing waste material into the hopper, it is not done in a homogenous way, such that it is not assured that single flat pieces will be introduced between the rollers but all sorts of shapes, multi-layered waste or agglomerations which may comprise other materials for example the metal latticeworks, electrical installations and the like, the asymmetric ridges assure that a firm grip and thereby a firm transport through the crushing mechanism will be provided.

Furthermore, as the two rollers are biased towards each other, the asymmetric ridges in combination with the non-homogeneous waste material introduced into the roller mill assures that the pressure introduced to the waste material through the roller mechanism is maintained as long as possible. Tests with symmetric ridges and grooves show that in instances where the grooves or the ridges are in the same frequency i.e. that the ridge on one roller is at the same level as the ridge on the other roller, there is a tendency for the waste material to slip and thereby the entire throughput in the device is lowered. Furthermore, the asymmetry also provides that waste agglomerations will be pushed through in that a roller may grip an electrical component, and at the same time, a plasterboard on one side and the other roller may at a different offset location grip something else, such that the entire agglomeration is pushed through. If the ridges had been symmetrical, there would have been a fourth connection point where the roller engaged the part of the waste material which was closest to the roller such that breakage in the waste material could occur whereby pieces or sections of the waste material would not be carried through the roller mechanism at the same speed as the item first engaged in the rollers.

In a further advantageous embodiment, two or more rollers are rotated at different rotational speeds, and means are provided for biasing the two or more rollers towards each other with a predetermined biasing force. By forcing the two or more rollers to rotate at different rotational speeds and direction, the impact of the waste material introduced into the hopper will be provided such that it is achieved that more waste can be processed through the rollers or rasping devices, and this is further emphasized by biasing the two rollers towards each other, such that a minimum tension at all times is guaranteed whereby the gripping or rasping of the material introduced between the two rollers is always such that a slight crushing will occur but more importantly, a firm grip on the materials and thereby a rather high output of the waste material through the coarse crushing mechanism is achieved.

In a further advantageous embodiment of the invention, the drum of the separating device is provided with at least three zones where the size and/or shape of the apertures making up the perforations varies, such that in a first zone adjacent to an end of the second conveying means the apertures has a first size, in a second zone adjacent to the first zone, the apertures are smaller than apertures in said first zone, and a third zone where the apertures are larger than in said first zone.

When the mass is pulverized and enters the drum, it is advantageous to reduce the waste material mass as quickly as possible in order to achieve a better separating procedure. For this purpose, the apertures in the first zone are relatively large such that the pulverized gypsum quickly will be separated from the remaining mass. During the rotation of the drum, the waste material inside the drum will be exposed to a physical treatment which will separate agglomerates such that particles in the waste mass will become loose. In the second zone, the amount of waste material is being reduced to approximately 50 % and during travelling through the second zone, the loose particles will due to the mechanical workings of the drum leave the residue waste material through the apertures of this zone. The further treatment of the waste material will release larger particles which will have an opportunity to leave the drum in the third zone.

In a further advantageous embodiment of the invention, the separation of magnetic particles and items in the magnetic separator is improved in that in the magnetic separator's inlet opening a screw conveyor is arranged across said inlet opening where the conveyor comprises a conveying screw arranged for rotation around a longitudinal axis, and a conveyor housing encasing only a part of the conveying screws circumference but along the entire longitudinal extension of the screw.

By distributing the material which is to pass through the magnetic separator by means of the screw conveyor, the magnetic field in the magnetic separator will be utilized in a more optimal way. Instead of all the material entering in one side only of the magnetic separator, whereby the magnetic field may not be able to pull out all items from the waste material introduced into the magnetic separator, the material is spread out and distributed throughout the magnetic field whereby a higher quality of the magnetic separation is achieved.

In order to distribute the material more or less homogenously across the inlet of the magnetic separator, the screw conveyor is arranged such that the housing of the screw conveyor is only covering a part of the conveying screw's circumference such that as the waste material is pushed through the screw conveyor, part of the material will fall over the edge of the housing and thereby be introduced into the magnetic separator. By designing the housing for example such that it will cover less and less of the circumference the further the housing is from the screw conveyor's beginning i.e. where the waste material is introduced into the screw conveyor, it can be designed such that at the end of the screw conveyor, it is completely empty. This is simply done by making the housing smaller and smaller such that it requires less material in the screw conveyor before it falls over the edge and thereby into the magnetic separator. Alternatively, the conveying screw may be elevated in one end such that the screw conveyor will transport the material upwards whereby due to the force of gravity more material will be kept at the lower end of the screw conveyor and will fall out over the edge of the housing. With this embodiment, it is important to design the elevation of the screw conveyor such that still a more or less homogeneous distribution of particles across the inlet is achieved.

Above, the invention has been explained with reference especially to reusing and regenerating gypsum from gypsum based material such as plasterboards, but the apparatus is just as suitable for reuse or regeneration of other materials where a roller treatment of the material will flatten the material and at the same time introduce a certain fragility and brittleness into the material such that it will be possible to substantially pulverize all fractions of the material as explained above with reference to the inventive apparatus.

The invention will now be explained with reference to the accompanying drawing.

Explanations of specific examples of the invention shall not be taken as limitations of the scope of the invention, but the scope of the present invention shall only be limited by the appended claims.
- fig. 1: illustrates a schematic representation of an apparatus according to the invention,

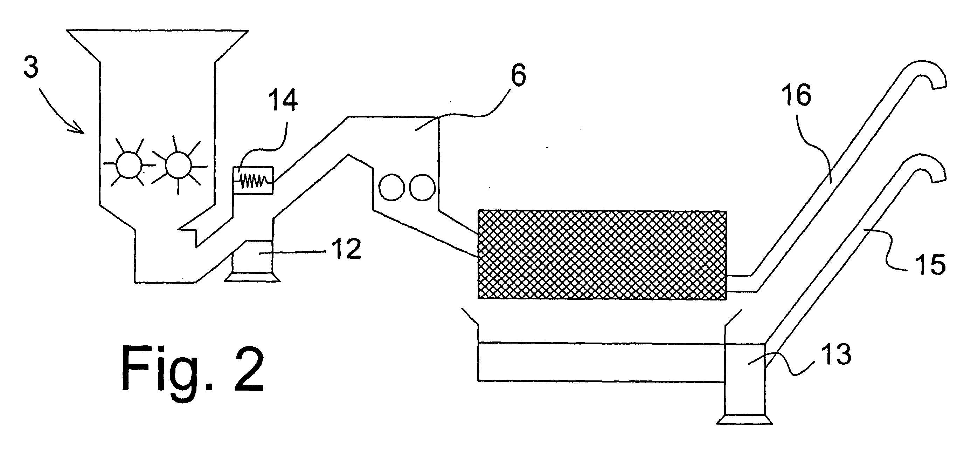

- fig. 2: illustrates an alternative embodiment of the apparatus,
- fig. 3: illustrates the outlet end of the apparatus,
- fig. 4: illustrates the apparatus arranged as a mobile unit
- fig. 5: illustrates the screw conveyor in connection with the magnetic separator,
- fig. 6a: illustrates a roller used in the roller mill device,
- fig. 6b: illustrates a detail of the roller illustrated in fig. 6a,
- fig. 7: illustrates an alternative embodiment of the crusher.

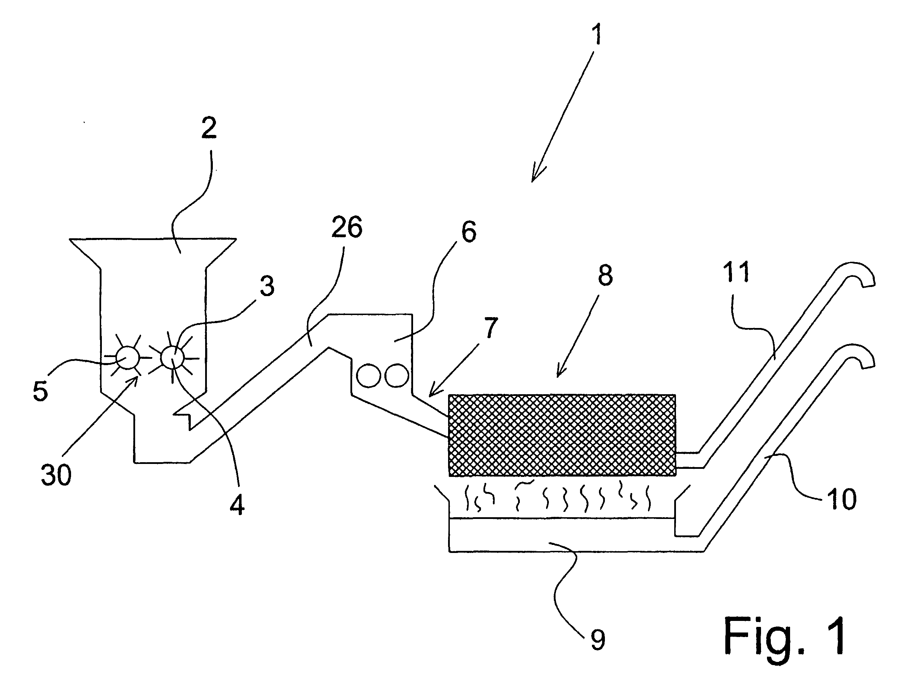

In fig. 1, an apparatus according to the invention is illustrated, where the apparatus comprises a hopper 2 and means for coarse crushing the waste material. The materials, especially materials comprising gypsum which may be reused or regenerated after treatment in the apparatus according to the invention, is introduced into the hopper.

Prior to being placed into the hopper, the waste material may be pre-sorted such that metal, electrical equipment such as wires, switches and the like may be separated from the waste material mass. Thereafter, the waste material is passed through the means for coarse crushing, and in the illustrated example, coarse crushing is facilitated by two counter rotating rollers. Spikes or knives as illustrated in fig. 7. The description of these means is mentioned below. In addition to the means specifically mentioned, any other means which are suitable for carrying out a coarse crushing of materials which comprise a hydraulic binder may be used within the scope of this invention.

After the material has been coarsely crushed in the means 3, they are conveyed to a roller installation 6 by means of a first transport arrangement 26. Any type of transport arrangement may be used such as a conveyor belt particularly conveyor belts that are U-shaped in order to carry the coarsely crushed materials. In the illustrated apparatus, screw conveyors are used in that this type of conveyors for the present invention provides a number of advantages. By using screw conveyors where the screw is arranged inside the pipe, it is easier to contain the development of dust, and thereby lessen the impact on the immediate surroundings.

During the rolling of the waste material in the roller installation 6, the crushed material will be flattened to substantially flat pieces. Particularly, at this point where the waste material pieces are flattened and not exposed to any further crushing in a further means for crushing makes the apparatus according to the invention especially suitable for the regeneration of materials comprising a hydraulic binder and especially gypsum as will be explained further below.

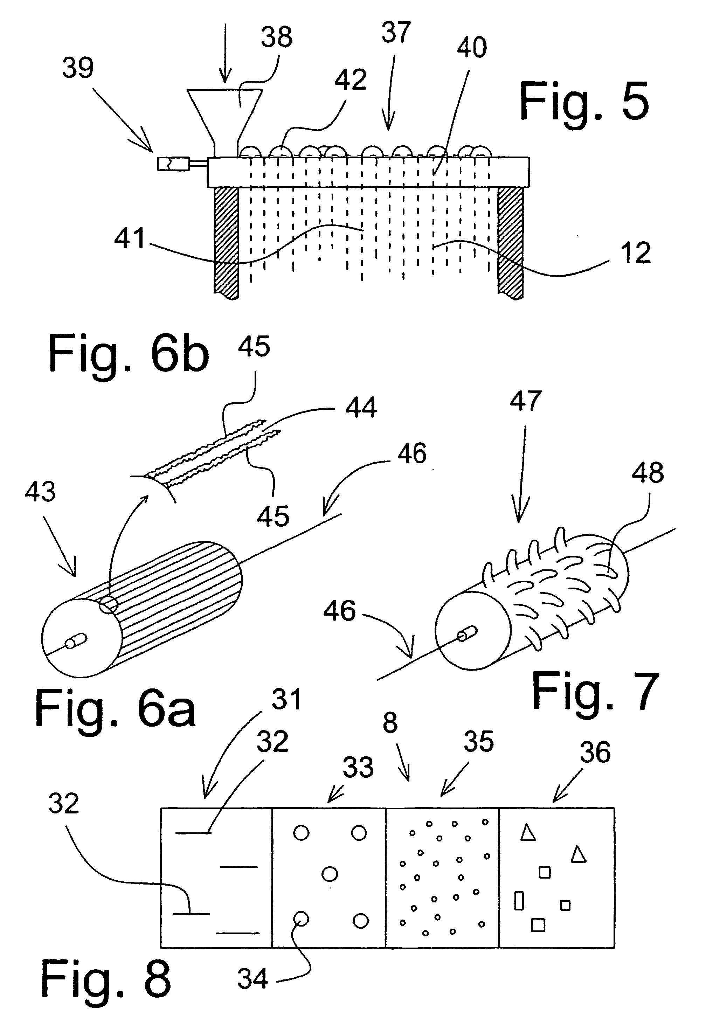

In fig. 6a a roller for use in the roller mill is illustrated. Along the longitudinal axis 46 ridges and grooves are provided.

In fig. 6b a detail of a preferred embodiment of the grooves 44 and the ridges 45 is illustrated. The ridges 45 are asymmetric both in a direction parallel to the longitudinal direction 46 of the roller and perpendicular to this axis. Hereby is achieved that a firm grip is established such that pressure and pulling (tension) is applied to the plaster board pieces whereby pulverisation is achieved, and the pieces are flattened at the same time.

The flat pieces will be conveyed by a second conveying means 7 to a perforated separating drum 8. The drum 8 has a perforated wall such that pulverized material comprised in the waste material will be able to leave the waste mass through the perforations in the separating drums wall. When plasterboard is treated in the apparatus according to the invention, the powder material will be the gypsum which will leave the separating drum 8 through the perforations in the wall of the drum. The material will be collected in a further conveying means 9 from which it will be led to packaging or other suitable reuse/regeneration by the transport means 10. The pulverization or creation of particles having a very small size is due to the fact that the flat pieces after having passed the roller 6 will inherently have a high brittleness in that materials comprising a hydraulic binder characteristically has good properties for resisting pressure whereas the integrity of the material towards tension is very limited, and the roller action will induce a very high tension in the material. By the influence on the flat pieces partly due to the conveying in the second means for conveying 7 but especially due to the action in the separating drum where the waste material is effectively exposed to mechanical forces partly due to the impact of the waste material with the wall of the drum but also due to the interaction between the different particles of the waste material kept in the drum, the material will disintegrate. By this action, the weak connections in the material due to the brittle structure of the material will be broken such that a finely ground powder like mass will be created.

In order to further improve the mechanical action especially inside the separating drum 8 a first zone 31 in the drum may be provided with fins, ribs or the like 32 in order to further improve the mechanical forces to which the waste material is exposed.

Turning to fig. 8, the different zones inside the drum is schematically illustrated. In the first zone 31, as mentioned above, there are no perforations, but a number of fins or ribs 32 have been arranged in order to improve the mechanical impact which the drum imparts on the waste material being introduced into the drum 8. In the second zone 33, the apertures 34 are relatively large. Due to the mechanical influence on the waste material both in the coarse crushing device 3 and the roller mill 6 as well as by the fins 32, the waste material will have separated into a powder mass and larger particles. By providing relatively large apertures 34 in the second zone 33, a rather large fraction of the waste material will be separated at this stage, whereby the further separation in the drum 8 will be further improved.

In the third zone 35, the apertures are relatively smaller. This is done in order to impart a relatively higher mechanical stress to the waste material such that further gypsum may be released from the paper fraction. In this stage, however, there is relatively little gypsum left in the waste material mass.

In the final zone 36, the apertures are again relatively large, in that due to moisture, paint or other influences, certain gypsum particles may have agglomerated but separated from the sheets/paper which have held the plasterboards together. In order to facilitate the removal of these larger particles, the apertures are somewhat larger.

In comparison to other prior art methods where paper and gypsum are shredded to relatively small sizes, this apparatus and method maintain due to the action in the coarse crushing means 3 rather large pieces which are not further cut down or shredded through the apparatus so that also the sheets/paper parts being introduced into the drum will remain in the drum.

After leaving the fourth zone 36 of the drum 8, the remaining material inside the drum will be transported by a fourth conveying means 11 either for further separation or for storage in a landfill.

The apertures in the different zones of the drum 8 will typically have different sizes. In the second zone 33, the apertures will have a size corresponding to a hole diameter between 10 and 20 mm. preferably approximately 15 mm. In the third zone 35, the apertures will typically have a size corresponding to approximately half of the size in the second zone namely corresponding to a hole diameter of between 4 and 10 mm. In the fourth zone, the apertures are relatively larger than in the second zone, up to an equivalent hole diameter of between 15 and 25 mm. In order to provide these apertures, tests have indicated that the apertures in the fourth zone 36 may advantageously be triangular or quadratic in that the square holes provide a larger effective area in that the diagonal of a square hole is relatively larger than the diameter of a round hole having the same area whereby larger particles can be passed through the wall of the drum 8. Also at the same time, by providing quadratic holes, it is possible to design the pattern of these holes such that a relatively higher structural strength of the drum itself may be maintained even at a rather high percentage of the perforations in the drum.

With a drum designed according to the parameters above, tests have shown that the gypsum collected in the conveyor means 9 typically has a grain size distribution such that grain sizes of 0 to 1 mm. constitutes 70 % of the regenerated gypsum and grain sizes 1 to 10 mm. constitutes the last 30 %.

Depending on the waste material introduced into the hopper, the first zone of the drum may also be substantially smooth. By this arrangement is achieved that a certain layered structure will appear in the waste material. Due to the forces of gravity and the rotation of the drum, the smaller particles of the waste material will have a tendency to travel downwards in the mass material whereas larger particles will "float" on top of the waste material. As this layered mass travels on in the drum and enters first the second zone with relatively larger holes, tests have shown that a substantial part of the gypsum residue will be separated at this stage.

The waste material left in the drum after having passed three or four zones is typically constituted of waste paper, metal parts in the shape of screws, nails, electrical wiring, switchboxes and the like. It is rather simple to collect this material and either further process by further separation or placing the waste in a landfill.

In order to further improve the effect of the apparatus, a magnetic separator 12 may be arranged between the coarse crushing means 3 and the roller device 6. A magnetic separator will separate metal parts out of the waste mass where the metal parts may be part of the latticework, as described above, screws, bolts, shims, electrical wiring or miscellaneous metal parts. By separating these items prior to the treatment in the roller device 6, an improved and smoother flatsqueezing of the remaining particles may be achieved through the waste materials passage of the roller device 6. In addition to improving the overall crushing effect of the apparatus by separating these metal articles, the wear and tear of the apparatus may be reduced whereby the overall life expectancy of the mechanical parts of the apparatus may be prolonged.

A second magnetic separator 13 may be arranged after the separating drum in order to collect any magnetic particles left in the collected gypsum powder.

Materials comprising a hydraulic binder have a tendency, as mentioned above, to be hydroscopic. Furthermore, during the demolition works of the construction from which the waste material derives, the material may have received moisture in the shape of rain or the like. The rather high moisture content in the waste material diminishes the effect of the crushing and rolling process as well as the separating process in the separating drum. Therefore, it may in some instances be desirable to remove at least a part of the moisture content in the waste material. This may be achieved by providing a heating arrangement 14 between the coarse crusher 3 and the roller mill 6. The heating arrangement may for example be a hot air blower, a microwave canon, an infrared canon or any other suitable source of heat which will have the required capacity in order to remove enough moisture from the crushed material such that an effective roller action and separation may be achieved. In order to control the heating at this stage, temperature sensors, thermocouples or other means for registering the temperature in the waste material during the heating process should be provided. It is in this connection important that the temperature in the gypsum material does not exceed 200 degrees Celsius and, moreover, from an economic point of view does not exceed 125 degrees Celsius which, with an apparatus according to the present invention, has been found to be an optimum process temperature in order to remove enough moisture from the waste material in order to be able to achieve a high level of separation through the apparatus.

Therefore, by coarse crushing, rolling and separating magnetic particles, removing excessive moisture and pulverizing particles by rolling and mechanically disintegrating the material, a very rational separation process is achieved such that gypsum may be reused and regenerated from this process.

The present invention is especially developed in order to treat plasterboards which plasterboards are constructed such that between two sheets of relatively heavy-duty paper or carton a 8-35 mm thick layer of gypsum is placed.

Although the apparatus and the method will be discussed with respect to treatment of this type of plasterboards, the apparatus, however, is also useful for any other type of material which when coarse crushed and rolled will achieve the disintegrated structure such that mechanical impact will pulverize the material.

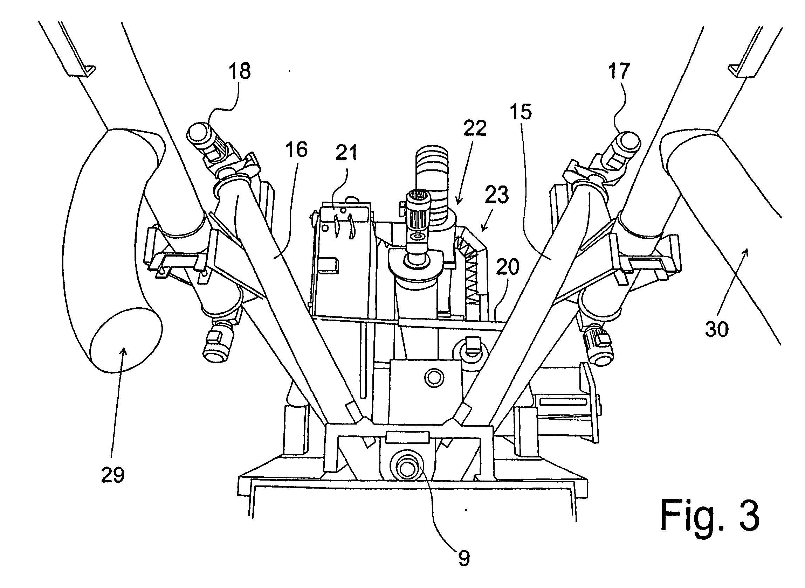

In fig. 3, a detail from the rear end of the machine is illustrated, where such machine is arranged on a trailer for road transport. The third and fourth conveying means 15,16 are here illustrated as screw conveyors which are driven by the electrical motor means 17,18 arranged at the top end of the screw conveyor. The lowermost section of the conveyor means 9 is indicated in the lower section of the figure.

Furthermore, after the control and activating mechanisms 20,21 for controlling and regulating the process in the separating drum as well as manipulation of the conveying means 15,16 for respectively conveying of the separated gypsum and the waste residue are also indicated on the figure. In order to be able to use the apparatus in densely populated areas, it is necessary to minimize the impact of the apparatus on the surroundings. This is partly achieved by arranging a vacuum installation 22 such that the entire apparatus will have a lower pressure than the surrounding air and that all outlets of the machine are covered by dust filters such that only very minimal dust will be released into the surroundings. Furthermore, the apparatus may as indicated by 23 be completely sealed in here indicated by means of a tarpaulin.

In the illustrated embodiment of the apparatus, the apparatus is arranged on a trailer for road transport which is an especially advantageous embodiment in that demolition, crushing and pulverization of the waste material may be carried out in-situ or close by, which reduces the transport needs of the waste material considerably. In order to be able to transport the apparatus on normal roads, it is necessary that the overall construction height of the trailer is kept within certain limits. To this end, the trailer including an apparatus according to the invention is built such that the entire construction height will be less than four meters. This is achieved in part by using screw conveyors as the degree of inclination in order to bring material from one part process to the following has no influence on the conveyor construction since also the complete trailer length is governed by laws relating to transportation.

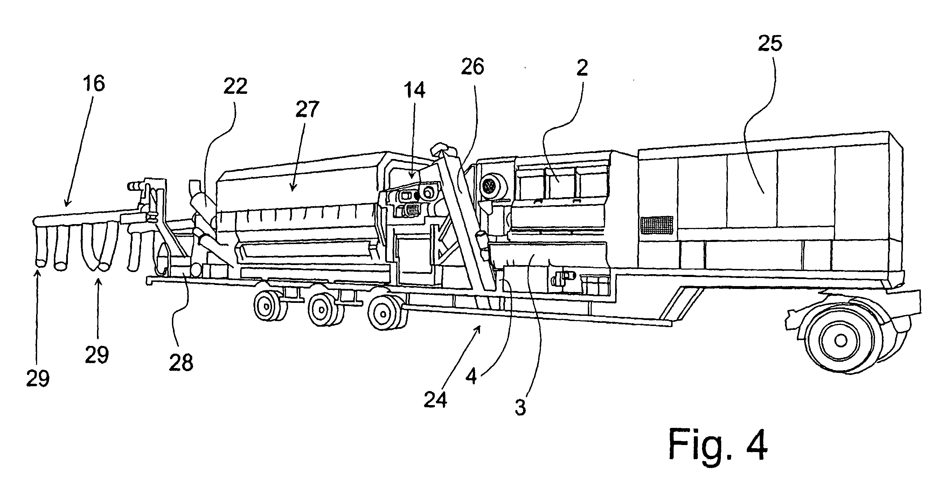

Returning to fig. 4, the apparatus according to the invention as illustrated in fig. 3 is arranged on a trailer for road transport 24. In order for the apparatus to be able to work at different locations, the apparatus is self-sufficient with respect to power in that a power pack 25 is arranged on the trailer. The hopper 2 which is in communication with the coarse crushing device as well as a magnetic separator 4 is arranged immediately adjacent to one another. After the magnetic separator 4, the coarse crushed material is transported to the roller mill by a first conveying means 26. Before the roller mill 14, a source of heating which removes the required amount of moisture from the coarse crushed material is provided.

In the closed space 27, the separating drum is arranged, which separating drum delivers two or more fractions as discussed with respect to fig. 3. One fraction is the pulverized gypsum material which usually is the largest fraction, and the second fraction is the residue waste material. When plasterboards are being treated in the apparatus, the residue fraction will mainly comprise of paper. The paper may be collected and packaged directly in a paper press illustrated at 28. The paper press in this example reduces the overall paper volume to approximately 1/5 of the original volume. In order to load off the collected pulverized gypsum fraction see fig. 3 and 4 into for example a container, a collection box may be provided at the end of the conveyor means 9. The collection box has a right side and a left side outlet, from each of which a screw conveyor 15,16 conveys the material into discharge in a container. At the discharged end of the screw conveyor, a section of the screw is arranged horizontally having two or more openings. The openings are arranged as discharged chutes 29,30. As the screw conveyor fills the container, the chute closest to the collection box will eventually fill up first. As this is full, the screw conveyor will not be able to discharge more gypsum through that chute and will, therefore, discharge through the second chute. When the container is completely filled, i.e. when the last chute is filled, a sensor means arranged in the last chute will trigger a shifting mechanism arranged in the collection box such that the first screw conveyor will be deactivated, and the second screw conveyor activated, after which a second container arranged adjacent to the first container will be filled. In this manner, it is possible to run the installation continuously as it is possible to replace a container when said container is full without having to halt the entire installation.

In order to minimize the dust annoyance in the immediate surroundings, a moisture cloud installation in the shape of one or more nozzles creating a water mist may be arranged adjacent to the discharged chutes 29,30.

In fig. 5 is illustrated a detail where a distributing screw conveyor 37 is arranged across the inlet opening of a magnetic separator 12. The waste material is introduced into the screw conveyor 37 through the hopper 38. In the illustrated example, the screw conveyor is activated by an electrical motor means 39. Any type of motor means could, however, be used in order to power the screw conveyor. As illustrated, the housing 40 surrounding the screw conveyor only covers a part of the screw such that the material entering the screw conveyor 37 will be distributed all along the screw conveyor across the inlet opening of the magnetic separator 12, and as the screw conveyor fills up, a part of the material 41 will be pushed across the edge of the housing in that the housing only covers part of the circumference of the screw 42. In this manner, it is achieved that the material introduced into the hopper 38 will be substantially evenly distributed along the screw conveyor and thereby across the magnetic field in the magnetic separator 12 is created. In this manner, the efficiency of the magnetic separator is substantially improved. In fig. 6a is illustrated a roller used for the roller mill. On the surface of the roller, as illustrated in detail in fig. 6b, grooves 44 and ridges 45 are provided. The asymmetric ridges 45 are made by creating an asymmetric and partially uneven welding seam along the surface of the roller 43 parallel to the longitudinal axis 46 of the roller.

If necessary, the grooves 44 may be further deepened by traditional grinding.

In fig. 7, another embodiment of a roller used in the inlet hopper 2 is arranged. This roller 47 is equipped with a number of knives 48 arranged in a pattern along the circumference of the roller 47 such that knives 48 on one roller will not be entangled in knives provided on a similar roller immediately adjacent to the first roller.

Although the invention has been explained in detail with reference to the accompanying drawings, the described embodiments should not be taken as a limitation of the scope of the invention, as this scope is determined by the appended claims. Furthermore, to operate the actual machine, a substantially complicated electrical and hydraulic installation is provided in order to distribute power to all the appliances mentioned above, and furthermore, control means for controlling the process and registering the stresses induced in the apparatus during the working routines of the apparatus have been installed. Additionally appropriate emergency and firefighting systems are installed. Due to the clarity of both the description and the drawings, these details have been left out.

## Claims

1. Apparatus for regenerating materials comprising a hydraulic binder, in particular gypsum, wherein the apparatus comprises a hopper arranged in connection with means for providing a coarse crushing of materials introduced into the hopper, and further that the means for coarse crushing is in connection with a first conveying means, which conveys the coarse crushed material to an inlet opening for a roller mill device where the coarse crushed material is rolled, after which a second conveyor means conveys the material to a separating device comprising a perforated separating drum, where the perforations allows the crushed and milled fine particles to pass through the perforations and be collected in a third conveyor means for reuse or alternatively storage, and that the material left in the drum by means of a fourth conveyor means, is transported away for storage or disposal.

2. Apparatus according to claim 1, wherein the means for coarse crushing of materials comprises one or more counter rotating rollers and/or rasping devices and/or knives.

3. Apparatus according to claim 1, wherein between the means for coarse crushing and the first conveying means and/or adjacent the third conveying means a magnetic separator is arranged.

4. Apparatus according to claim 1, wherein inside or in connection with the means for coarse crushing and/or between the roller mill and the separating device means are provided for heating the crushed material.

5. Apparatus according to claim 1, wherein adjacent the separating device and before the fourth conveying means a paper collecting and compression device is provided.

6. Apparatus according to any preceding claim, wherein the apparatus is arranged on a commercial trailer suitable for road transport, and that a means for providing power to the apparatus is provided in the apparatus.

7. Apparatus according to any preceding claim, wherein the material comprising a hydraulic binder is plasterboard, which comprises a gypsum core either pure, modified and/or fibre reinforced, where said core is covered or partly covered on one or both plane sides by cover sheets, where said sheets may contain cellulose, for example as a paper product and/or said sheets may further be treated or covered by paint, polymers, textiles or other coverings.

8. Apparatus according to any preceding claim, wherein the apparatus is constructed such that all means and equipment is provided in a dust closed environment, and that means are provided for maintaining a lower pressure inside the apparatus than in the surrounding environment.

9. Apparatus according to claim 1, wherein the rollers of the roller mill are substantially cylindrical and rotates about parallel longitudinal axis and further that the rollers are provided with asymmetric grooves and ridges parallel to the longitudinal axis, and that the asymmetry of the ridges is at least provided perpendicularly to the longitudinal axis, and optionally for the grooves in the width and depth of the individual grooves.

10. Apparatus according to claim 1 or claim 9, wherein the two or more rollers are rotated at different rotational speeds, and that means are provided for biasing the two or more rollers towards each other with a predetermined biasing force.

11. Apparatus according to claim 1, wherein the drum of the separating device is provided with at least three zones where the size and/or shape of the apertures making up the perforations varies, such that in a first zone adjacent an end of the second conveying means the apertures has a first size, in a second zone adjacent the first zone the apertures are smaller than apertures in said first zone and a third zone where the apertures are larger than in said first zone.

12. Apparatus according to claim 3, wherein in the magnet separators inlet opening a screw conveyor is arranged across said inlet opening where the conveyor comprises a conveying screw arranged for rotation around a longitudinal axis, and a conveyor housing encasing only a part of the conveying screws circumference, but along the entire longitudinal extension of the screw.

## Patentansprüche

1. Vorrichtung zur Rückgewinnung von Materialien, welche einen hydraulischen Binder, insbesondere Gips, aufweisen, wobei die Vorrichtung einen Trichter aufweist, welcher in Verbindung mit einer Einrichtung zum Bereitstellen einer groben Zerkleinerung von Materialien, welche in den Trichter eingebracht werden, angeordnet ist, und wobei die Einrichtung zur groben Zerkleinerung sich in Verbindung mit einer ersten Transporteinrichtung befindet, welche das grob zerkleinerte Material zu einer Einlassöffnung für eine Walzenmühle transportiert, an welcher das grob zerkleinerte Material gewalzt wird, wobei danach eine zweite Transporteinrichtung das Material zu einer Trenneinrichtung transportiert, welche eine perforierte Trenntrommel aufweist, an welcher die Perforationen den zerkleinerten und gemahlenen feinen Partikeln ermöglicht durch die Perforationen hindurch zu schreiten und in einer dritten Transporteinrichtung für eine Wiederverwendung oder wahlweise für eine Aufbewahrung gesammelt zu werden, und wobei das in der Trommel zurückgelassene Material durch eine vierte Transporteinrichtung für eine Speicherung oder für eine Entsorgung abtransportierbar ist.

2. Vorrichtung nach Anspruch 1, wobei die Einrichtung zur groben Zerkleinerung von Materialien eine oder mehrere gegenläufig drehende Walzen und/oder Raspelvorrichtungen und/oder Messer aufweist.

3. Vorrichtung nach Anspruch 1, wobei zwischen der Einrichtung zur groben Zerkleinerung und der ersten Transporteinrichtung und/oder benachbart zu der dritten Transporteinrichtung ein magnetischer Separator angeordnet ist.

4. Vorrichtung nach Anspruch 1, wobei innerhalb oder in Verbindung mit der Einrichtung zu groben Zerkleinerung und/oder zwischen der Walzenmühle und der Trenneinrichtung Einrichtungen zum Aufheizen des zerkleinerten Materials vorgesehen sind.

5. Vorrichtung nach Anspruch 1, wobei benachbart zur Trennvorrichtung und vor der vierten Transporteinrichtung eine Papiersammel- und Kompressionseinrichtung vorgesehen ist.

6. Vorrichtung nach einem der vorhergehenden Ansprüche, wobei die Vorrichtung auf einem für den Straßentransport geeigneten kommerziellen Anhänger angeordnet ist und wobei eine Einrichtung zum Bereitstellen einer Stromversorgung für die Vorrichtung innerhalb der Vorrichtung vorgesehen ist.

7. Vorrichtung nach wenigstens einem der vorhergehenden Ansprüche, wobei das einen hydraulischen Binder aufweisende Material als Gipsplatte ausgebildet ist, welche einen entweder reinen, modifizierten und/oder faserverstärkten Gipskern aufweist, wobei der Kern auf einer oder beiden ebenen Seiten durch Abdeckblätter bedeckt oder teilweise bedeckt ist, wobei die Blätter Zellulose enthalten können, z. B. als Papierprodukt, und/oder wobei die Blätter ferner mit Farbe, Polymeren, Textilien oder anderen Beschichtungen behandelt oder bedeckt sein können.

8. Vorrichtung nach wenigstens einem der vorhergehenden Ansprüche, wobei die Vorrichtung derart konstruiert ist, dass alle Einrichtungen und Anlagen in einer staubdichten Umgebung angeordnet sind und wobei Einrichtungen zum Aufrechterhalten eines geringeren Drucks innerhalb der Vorrichtung gegenüber der umgebenden Umgebung vorgesehen sind.

9. Vorrichtung nach Anspruch 1, wobei die Walzen der Walzenmühle im Wesentlichen zylindrisch sind und sich um eine parallele Längsachse drehen, und wobei die Walzen ferner mit asymmetrischen Vertiefungen und Rippen parallel zu der Längsachse versehen sind, und wobei die Asymmetrie der Rippen mindestens senkrecht zu der Längsachse und wahlweise geeignet für die Vertiefungen in der Breite und Tiefe der einzelnen Vertiefungen vorgesehen ist.

10. Vorrichtung nach Anspruch 1 oder 9, wobei die zwei oder mehreren Walzen mit verschiedenen Drehgeschwindigkeiten rotieren, und wobei eine Einrichtung zum Vorspannen der zwei oder mehr Walzen in Richtung zueinander mit einer vorbestimmten Vorspannkraft vorgesehen ist.

11. Vorrichtung nach Anspruch 1, wobei die Trommel der Trenneinrichtung mit mindestens drei Bereichen ausgestattet ist, wobei die Größe und/oder die Form der Öffnungen, welche die Perforationen bilden, variieren, so dass in einem ersten Bereich angrenzend an ein Ende der zweiten Transporteinrichtung die Öffnungen eine erste Größe aufweisen, in einem zweiten Bereich angrenzend an den ersten Bereich die Öffnungen kleiner sind als die Öffnungen in dem ersten Bereich und dass in einem dritten Bereich die Öffnungen größer sind als in dem ersten Bereich.

12. Vorrichtung nach Anspruch 3, wobei in der Einlassöffnung des Magnetseparators ein Schneckenförderer über der Einlassöffnung angeordnet ist, wobei das Fördermittel eine Förderschnecke aufweist, welche zum Drehen um eine Längsachse vorgesehen ist, und wobei ein Fördermittelgehäuse nur einen Teil des Förderschraubenumfangs umgibt, jedoch entlang der gesamten Längserstreckung der Schraube vorgesehen ist.

## Revendications

1. Appareil pour recycler des matériaux comprenant un liant hydraulique, en particulier du plâtre, dans lequel l'appareil comprend une trémie agencée en liaison avec des moyens pour fournir un concassage grossier des matériaux introduits dans la trémie, et de plus en ce que les moyens pour le concassage grossier sont en liaison avec des premiers moyens de transport, qui transportent le matériau concassé grossier vers une ouverture d'entrée d'un dispositif broyeur à rouleaux où le matériau concassé grossier est laminé, après quoi des deuxièmes moyens de transport transportent le matériau vers un dispositif de séparation comprenant un tambour de séparation perforé, où les perforations permettent le passage des fines particules concassées et broyées et la collecte de celles-ci dans des troisièmes moyens de transport à des fins de réutilisation ou alternativement de stockage, et en ce que le matériau laissé dans le tambour, par l'intermédiaire de quatrièmes moyens de transport, est transporté plus loin pour stockage ou évacuation.

2. Appareil selon la revendication 1, dans lequel les moyens pour le concassage grossier des matériaux comprennent un ou plusieurs rouleaux contrarotatifs et/ou des dispositifs de râpage et/ou des couteaux.

3. Appareil selon la revendication 1, dans lequel, entre les moyens pour le concassage grossier et les premiers moyens de transport et/ou de façon adjacente aux troisièmes moyens de transport, est agencé un séparateur magnétique.

4. Appareil selon la revendication 1, dans lequel, à l'intérieur ou en liaison avec les moyens pour le concassage grossier et/ou entre le broyeur à rouleaux et le dispositif de séparation, sont prévus des moyens pour chauffer le matériau concassé.

5. Appareil selon la revendication 1, dans lequel un dispositif de collecte et de compression de papier est prévu de façon adjacente au dispositif de séparation et avant les quatrièmes moyens de transport.

6. Appareil selon une quelconque revendication précédente, dans lequel l'appareil est agencé sur une remorque utilitaire appropriée pour le transport routier, et en ce que des moyens pour fournir de la puissance à l'appareil sont prévus dans l'appareil.

7. Appareil selon une quelconque revendication précédente, dans lequel le matériau comprenant un liant hydraulique est du carton-plâtre ou Placoplâtre, qui comprend un noyau en plâtre soit pur, modifié et/ou renforcé de fibres, où ledit noyau est recouvert ou partiellement recouvert sur l'une ou les deux faces planes par des feuilles de recouvrement, où lesdites feuilles peuvent contenir de la cellulose, par exemple en tant que produit de papier et/ou lesdites feuilles peuvent être de plus traitées ou recouvertes de peinture, polymères, textiles ou autres recouvrements.

8. Appareil selon une quelconque revendication précédente, dans lequel l'appareil est construit de telle façon que tous les moyens et équipement soient prévus dans un environnement clos vis-à-vis des poussières, et en ce que des moyens sont prévus pour maintenir une pression à l'intérieur de l'appareil inférieure au milieu environnant.

9. Appareil selon la revendication 1, dans lequel les rouleaux du broyeur à rouleaux sont sensiblement cylindriques et tournent autour d'axes longitudinaux parallèles et en ce que de plus les rouleaux sont munis de rainures et d'arêtes asymétriques parallèles aux axes longitudinaux, et en ce que l'asymétrie des arêtes est au moins prévue de façon perpendiculaire aux axes longitudinaux, et éventuellement des rainures dans la largeur et la profondeur des rainures particulières.

10. Appareil selon la revendication 1 ou la revendication 9, dans lequel deux ou plusieurs rouleaux tournent à des vitesses de rotation différentes, et en ce que des moyens sont prévus pour solliciter les deux ou plusieurs rouleaux les uns vers les autres avec une force de sollicitation prédéterminée.

11. Appareil selon la revendication 1, dans lequel le tambour du dispositif de séparation est muni d'au moins trois zones où la dimension et/ou la forme des ouvertures composant les perforations varient, de telle façon que, dans une première zone adjacente à une extrémité des deuxièmes moyens de transport, les ouvertures aient une première dimension, dans une deuxième zone adjacente à la première zone, les ouvertures soient inférieures aux ouvertures de ladite première zone et une troisième zone où les ouvertures sont supérieures à celles de ladite première zone.

12. Appareil selon la revendication 3, dans lequel dans l'ouverture d'entrée du séparateur à aimants, un transporteur à vis sans fin est agencé à travers ladite ouverture d'entrée, où le transporteur comprend une vis transporteuse agencée pour la rotation autour d'un axe longitudinal, et un carter de transporteur enferme seulement une partie de la périphérie de la vis transporteuse, mais le long de l'extension longitudinale totale de la vis.
